# EUROPEAN PATENT APPLICATION

(11) **EP 4 518 436 A1**
(43) Date of publication of application: **05.03.2025**
(21) Application number: 23194087.5
(22) Date of filing: 29.08.2023
(51) Int. Cl.: H04W 48/02, H04W 4/24, H04W 8/12, H04W 8/18, H04M 15/00

(54) **DETECTING PREVENTION OF DATA ROAMING SERVICES**

(71) Applicant: Vodafone Group Services Limited, Newbury RG14 2FN (GB)
(72) Inventor: SPORTON, Simon, London, W2 6BY (GB)
(74) Representative: Boult Wade Tennant LLP

(57) **Abstract**

Methods and apparatus for notifying a user equipment attached to a mobile telecommunications network that a configuration of the user equipment prevents mobile data services. Network usage data indicative of an amount of data which has been exchanged by the user equipment whilst attached to the mobile telecommunications network is received. It is determined, in dependence on the received network usage data, that a configuration of the user equipment prevents mobile data services. A communication is sent to the user equipment, in dependence on the determination that a configuration of the user equipment prevents mobile data services. The communication indicates that the configuration of the user equipment prevents mobile data services.

## Description

The present disclosure relates to methods and apparatus for determining and notifying a device that is prevented from using data services provided by a mobile telecommunications network. The methods and apparatus may find particular application in determining and notifying a roaming device that is prevented from using data roaming services provided by a visited mobile telecommunications network.

### BACKGROUND

A mobile telecommunications network provides a range of services to devices attached to the mobile telecommunications network. For example, a device attached to a mobile telecommunications network may be provided with voice, messaging and/or data services. In some scenarios, a device may be prevented from accessing data services. For example, data services may be blocked by a configuration of the device, such as a user setting of the device which has been set to block at least some data services. For example, a user setting of a device may be set to prevent access to data services whilst the device is roaming and attached to a visited mobile telecommunications network (as opposed to a home mobile telecommunications network).

In a particular example, a user setting of a device may, as default, be set to block at least some data services. Such user settings (which may include default device settings) may be set in order to prevent unwanted billing of data services to a user. However, such settings may prevent a user from accessing data services, in scenarios in which they wish to use data services and consent to any billing arrangement for such data services.

It is in this context that the subject matter contained in the present application has been devised.

### SUMMARY

It has been realised that it may not be apparent to a user of a device which is prevented from using a mobile data service (due to a configuration of the user device, such as a user setting), that they are prevented from using the mobile data service, why they are prevented from using the mobile data service, and how to overcome the prevention from using the mobile data service. It has been further realised that a user which is prevented from accessing a mobile data service due to a configuration of their user device (e.g., a user setting of the device) may be assisted in changing a configuration of the user device in order to enable access to the mobile data service, by sending a communication to the user device. Such a communication may notify the user of the reason as to why they are prevented from using the mobile data service. For example, the communication may notify the user that their device is currently configured to prevent use of the mobile data service and may assist the user (for example, by providing instructions) in changing the configuration of the device so as to enable use of the mobile data service. It has been further realised that one or more devices whose configuration prevents the use of a mobile data service may be identified using data which is available to a mobile telecommunications network operator and such identification may be used to determine one or more devices to which a communication may be sent.

Methods and apparatus are presented herein for determining a device that has a configuration which prevents the use of a mobile data service. Such a device may be determined using information which is available to a mobile telecommunications network operator and may not require specific or direct knowledge of a configuration of the device. The methods and apparatus may further send a communication to a device which is identified as having a configuration which prevents the use of a mobile data service. The communication may serve to inform a user of a determined configuration of the device which prevents the use of the mobile data service. Determining and notifying a device which is prevented from using a mobile data service and using data which is available to a network operator, allows the determination and notification to be performed at a network (rather than device) side and as such can be independent of device specific user settings.

The methods and apparatus disclosed herein may find particular application in identifying a device which is roaming (i.e., attached to a visited network as opposed to a home network) and which has a configuration which prevents the roaming device from using a mobile data service whilst roaming (roaming data).

According to a first aspect of the present disclosure there is provided a method of notifying a roaming device that a configuration of the roaming device prevents mobile data roaming services, wherein the roaming device comprises a user equipment attached to a visited mobile telecommunications network. The method comprises: receiving network usage data indicative of an amount of data which has been exchanged by the roaming device whilst attached to the visited mobile telecommunications network; determining, in dependence on the received network usage data, that a configuration of the roaming device prevents mobile data roaming services; and sending, in dependence on the determination that a configuration of the roaming device prevents mobile data roaming services, a communication to the roaming device indicating that the configuration of the roaming device prevents mobile data roaming.

The network usage data may be indicative of an amount of data which has been sent by the roaming device whilst attached to the visited mobile telecommunications network.

The network usage data may be indicative of an amount of data which has been received by the roaming device whilst attached to the visited mobile telecommunications network.

In some examples, the network usage data may comprise a plurality of data fields. For example, the network usage data may comprise a first data field indicative of an amount of data which has been sent by the roaming device whilst attached to the visited mobile telecommunications network and a second data field indicative of an amount of data which has been received by the roaming device whilst attached to the visited mobile telecommunications network.

Determining that a configuration of the roaming device prevents mobile data roaming services may comprise determining, from the network usage data, that an amount of data which has been exchanged by the roaming device whilst attached to the visited mobile telecommunications network is equal to or less than a threshold amount of data.

Determining that an amount of data which has been exchanged by the roaming device whilst attached to the visited mobile telecommunications network is equal to or less than a threshold amount of data may comprise determining that an amount of data which has been sent by the roaming device whilst attached to the visited mobile telecommunications network is equal to or less than a threshold amount of data. Additionally or alternatively, determining that an amount of data which has been exchanged by the roaming device whilst attached to the visited mobile telecommunications network is equal to or less than a threshold amount of data may comprise determining that an amount of data which has been received by the roaming device whilst attached to the visited mobile telecommunications network is equal to or less than a threshold amount of data

The threshold amount of data may comprise substantially no data. For example, determining, in dependence on the received network usage data, that a configuration of the roaming device prevents mobile data roaming services may comprise determining that the roaming device has exchanged little or no data (e.g., substantially no data) whilst attached to the visited network. Determining, in dependence on the received network usage data, that a configuration of the roaming device prevents mobile data roaming services may comprise determining that the roaming device has sent little or no data (e.g., substantially no data) whilst attached to the visited network. Additionally or alternatively, determining, in dependence on the received network usage data, that a configuration of the roaming device prevents mobile data roaming services may comprise determining that the roaming device has received little or no data (e.g., substantially no data) whilst attached to the visited network

The method may further comprise: monitoring an interface between the visited mobile telecommunications network and a home mobile telecommunications network; and generating the network usage data based on the monitoring of the interface between the visited mobile telecommunications network and the home mobile telecommunications network.

The method may further comprise determining that the roaming device has an established data connection whilst attached to the visited mobile telecommunications network. The determining that a configuration of the roaming device prevents mobile data roaming services, may be further in dependence on the determination that the roaming device has an established data connection whilst attached to the visited mobile telecommunications network.

The established data connection may comprise a packet data protocol (PDP) context. Determining that a configuration of the roaming device prevents mobile data roaming services may comprise determining that the roaming device has an established data connection whilst attached to the visited mobile telecommunications network and determining that the usage data meets one or more criteria. The one or more criteria may comprise an amount of data which has been exchanged by the roaming device whilst attached to the visited mobile telecommunications network being equal to or less than a threshold amount of data

The communication to the roaming device indicating that the configuration of the roaming device prevents mobile data roaming may further comprise instructions for changing a configuration of the roaming device to allow mobile data roaming.

The method may further comprise determining a device type of the roaming device; and determining the instructions for changing a configuration of the roaming device in dependence on the determined device type of the roaming device.

The communication to the roaming device indicating that the configuration of the roaming device prevents mobile data roaming may comprise a short message service (SMS) message.

The method may further comprise determining a billing policy associated with charging of usage of mobile data roaming services by the roaming device. Sending of the communication to the roaming device indicating that the configuration of the roaming device prevents mobile data roaming may be further in dependence on the determined billing policy.

The method may further comprise determining a communication policy associated with sending of communications to the roaming device. Sending of the communication to the roaming device indicating that the configuration of the roaming device prevents mobile data roaming may be further in dependence on the determined communication policy.

The method may further comprise determining that the roaming device is attached to a visited network.

According to a second aspect of the present disclosure there is provided a method of notifying a user equipment attached to a mobile telecommunications network that a configuration of the user equipment prevents mobile data services. The method comprises: receiving network usage data indicative of an amount of data which has been exchanged by the user equipment whilst attached to the mobile telecommunications network; determining, in dependence on the received network usage data, that a configuration of the user equipment prevents mobile data services; and sending, in dependence on the determination that a configuration of the user equipment prevents mobile data services, a communication to the user equipment indicating that the configuration of the user equipment prevents mobile data services.

The network usage data may be indicative of an amount of data which has been sent by the user equipment whilst attached to the mobile telecommunications network.

The network usage data may be indicative of an amount of data which has been received by the user equipment whilst attached to the mobile telecommunications network.

Determining that a configuration of the user equipment prevents mobile data services may comprise determining, from the network usage data, that an amount of data which has been exchanged by the user equipment whilst attached to the mobile telecommunications network is equal to or less than a threshold amount of data.

The threshold amount of data may comprise substantially no data.

The method may further comprise: monitoring data exchanged by the user equipment; and generating the network usage data based on the monitoring of the data exchanged by the user equipment.

The method may further comprise determining that the user equipment has an established data connection whilst attached to the mobile telecommunications network. The determining that a configuration of the user equipment prevents mobile data services, may be further in dependence on the determination that the user equipment has an established data connection whilst attached to the mobile telecommunications network.

The communication to the user equipment indicating that the configuration of the user equipment prevents mobile data services may further comprise instructions for changing a configuration of the user equipment to allow mobile data services.

The method may further comprise determining a device type of the user equipment; and determining the instructions for changing a configuration of the user equipment in dependence on the determined device type of the user equipment.

The method may further comprise determining a billing policy associated with charging of usage of mobile data services by the user equipment. Sending of the communication to the user equipment indicating that the configuration of the user equipment prevents mobile data services may be further in dependence on the determined billing policy.

The method may further comprise determining a communication policy associated with sending of communications to the user equipment. Sending of the communication to the user equipment indicating that the configuration of the user equipment prevents mobile data services may be further in dependence on the determined communication policy.

According to a third aspect of the present disclosure there may be provided computer program comprising instructions which when executed cause any method described herein (e.g., a method according to the first aspect and/or the second aspect) to be implemented.

According to a fourth aspect of the present disclosure there is provided a system for notifying a roaming device that a configuration of the roaming device prevents mobile data roaming services, wherein the roaming device comprises a user equipment attached to a visited mobile telecommunications network. The system is configured to receive network usage data indicative of an amount of data which has been exchanged by the roaming device whilst attached to the visited mobile telecommunications network; determine, in dependence on the received network usage data, that a configuration of the roaming device prevents mobile data roaming services; and send, in dependence on the determination that a configuration of the roaming device prevents mobile data roaming services, a communication to the roaming device indicating that the configuration of the roaming device prevents mobile data roaming.

The network usage data may be indicative of an amount of data which has been sent by the roaming device whilst attached to the visited mobile telecommunications network.

The network usage data may be indicative of an amount of data which has been received by the roaming device whilst attached to the visited mobile telecommunications network.

Determining that a configuration of the roaming device prevents mobile data roaming services may comprise determining, from the network usage data, that an amount of data which has been exchanged by the roaming device whilst attached to the visited mobile telecommunications network is equal to or less than a threshold amount of data.

The threshold amount of data may comprise substantially no data.

The system may be further configured to: monitor an interface between the visited mobile telecommunications network and a home mobile telecommunications network; and generate the network usage data based on the monitoring of the interface between the visited mobile telecommunications network and the home mobile telecommunications network.

The system may be further configured to: determine that the roaming device has an established data connection whilst attached to the visited mobile telecommunications network. The determining that a configuration of the roaming device prevents mobile data roaming services, may be further in dependence on the determination that the roaming device has an established data connection whilst attached to the visited mobile telecommunications network.

The communication to the roaming device indicating that the configuration of the roaming device prevents mobile data roaming may further comprise instructions for changing a configuration of the roaming device to allow mobile data roaming.

The system may be further configured to: determine a device type of the roaming device; and determine the instructions for changing a configuration of the roaming device in dependence on the determined device type of the roaming device.

The system may be further configured to determine a billing policy associated with charging of usage of mobile data roaming services by the roaming device. Sending of the communication to the roaming device indicating that the configuration of the roaming device prevents mobile data roaming may be further in dependence on the determined billing policy.

The system may be further configured to determine a communication policy associated with sending of communications to the roaming device. Sending of the communication to the roaming device indicating that the configuration of the roaming device prevents mobile data roaming may be further in dependence on the determined communication policy.

The system may be further configured to determine that the roaming device is attached to a visited network.

According to a fifth aspect of the present disclosure there is provided a system for notifying a user equipment attached to a mobile telecommunications network that a configuration of the user equipment prevents mobile data services. The system is configured to: receive network usage data indicative of an amount of data which has been exchanged by the user equipment whilst attached to the mobile telecommunications network; determine, in dependence on the received network usage data, that a configuration of the user equipment prevents mobile data services; and send, in dependence on the determination that a configuration of the user equipment prevents mobile data services, a communication to the user equipment indicating that the configuration of the user equipment prevents mobile data services.

The network usage data may be indicative of an amount of data which has been sent by the user equipment whilst attached to the mobile telecommunications network.

The network usage data may be indicative of an amount of data which has been received by the user equipment whilst attached to the mobile telecommunications network.

Determining that a configuration of the user equipment prevents mobile data services may comprise determining, from the network usage data, that an amount of data which has been exchanged by the user equipment whilst attached to the mobile telecommunications network is equal to or less than a threshold amount of data.

The threshold amount of data may comprise substantially no data.

The system may be further configured to monitor data exchanged by the user equipment; and generate the network usage data based on the monitoring of the data exchanged by the user equipment.

The system may be further configured to determine that the user equipment has an established data connection whilst attached to the mobile telecommunications network. The determining that a configuration of the user equipment prevents mobile data services, may be further in dependence on the determination that the user equipment has an established data connection whilst attached to the mobile telecommunications network.

The communication to the user equipment indicating that the configuration of the user equipment prevents mobile data services may further comprise instructions for changing a configuration of the user equipment to allow mobile data services.

The system may be further configured to determine a device type of the user equipment; and determine the instructions for changing a configuration of the user equipment in dependence on the determined device type of the user equipment.

The system may be further configured to determine a billing policy associated with charging of usage of mobile data services by the user equipment. Sending of the communication to the user equipment indicating that the configuration of the user equipment prevents mobile data services may be further in dependence on the determined billing policy.

The system may be further configured to determine a communication policy associated with sending of communications to the user equipment. Sending of the communication to the user equipment indicating that the configuration of the user equipment prevents mobile data services may be further in dependence on the determined communication policy.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all examples and/or features of any example can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more disclosed examples are shown schematically, by way of example, only in the accompanying drawings in which:
- FIG. 1 is a schematic illustration of a network architecture for roaming services;
- FIG. 2 is a flowchart of an example method of notifying a roaming device that a configuration of the roaming device prevents mobile data roaming services;
- FIG. 3 is a flowchart of an example method determining whether a configuration of a roaming device prevents mobile data roaming services;
- FIG. 4 is a schematic illustration of an example system for notifying a roaming device that a configuration of the roaming device prevents mobile data roaming services;
- FIG. 5 is a signal flow diagram illustrating an example method of notifying a roaming device that a configuration of the roaming device prevents mobile data roaming services;
- FIG. 6 is a flowchart of an example method of notifying a user equipment that a configuration of the user equipment prevents mobile data services; and
- FIG. 7 is a schematic illustration of an electronic device which may be used to implement all or part of any method disclosed herein.

### DETAILED DESCRIPTION

Before particular examples of the present invention are described, it is to be understood that the present disclosure is not limited to the particular examples described herein. It is also to be understood that the terminology used herein is used for describing particular examples only and is not intended to limit the scope of the claims.

In describing and claiming the apparatus and methods of the present invention, the following terminology will be used: the singular forms "a", "an", and "the" include plural forms unless the context clearly dictates otherwise. Thus, for example, reference to "a device" or "a component" includes reference to one or more of such elements.

The methods and apparatus which are disclosed herein may find particular application in identifying a device which is roaming and which has a configuration which prevents the roaming device from using a mobile data service whilst roaming. A device which is roaming is a device which is attached to a visited mobile telecommunications network as opposed to a home mobile telecommunications network.

Typically a device which is capable of attaching to a mobile telecommunications network (e.g., a public land mobile network) is registered with and has a billing arrangement with a home mobile telecommunications network (which may be referred to herein as a home network). The device will typically attach to and be served by its home network when located within a geographical area which is served by the home network. For example, when the device is located within a country which is served by the home network, then the device may attach to the home network. When a device is located outside of a geographical range which is served by its home network (for example, when it is located in a country not served by its home network), the device may attach to a visited mobile telecommunications network (which may be referred to as a visited network). The home network and the visited network may have an arrangement which allows the device to continue to access at least some mobile communication services (such as voice, messaging and/or data services) whilst attached to the visited network.

A device which is attached to a visited network (as opposed to a home network) is referred to herein as a roaming device. Mobile communication services such as voice, messaging and/or data services which are used whilst a device is roaming (attached to a visited network) may be referred to herein as roaming services. For example, mobile data services which are used by a roaming device (a device connected to a visited network) may be referred to herein as mobile data roaming services.

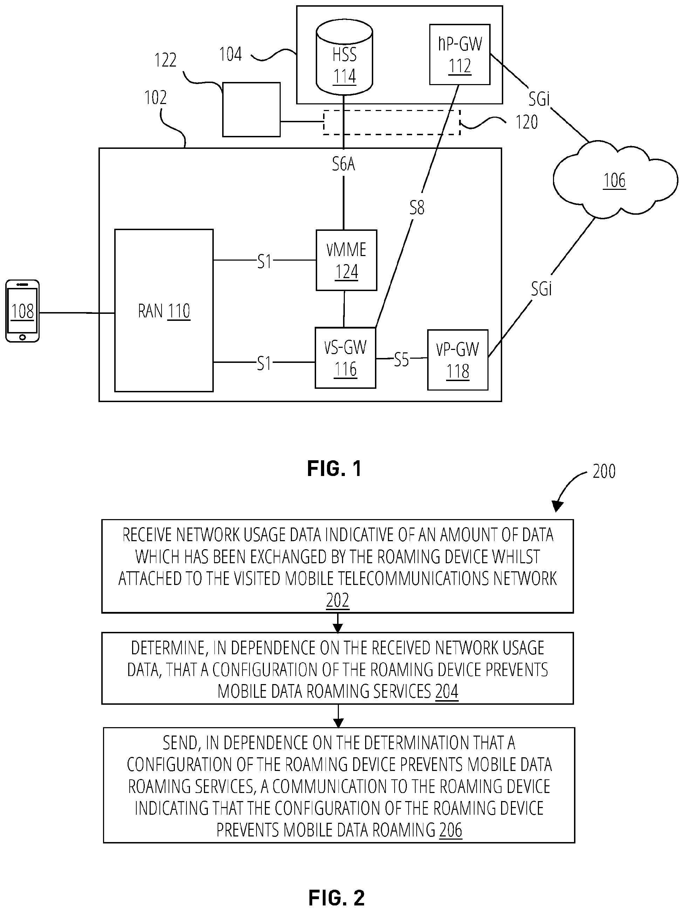

Figure 1 is a schematic illustration of an example network architecture which serves a roaming device. The illustrated architecture is provided purely as an illustrative example and includes network nodes typically associated with serving a roaming device using a Long-Term Evolution (LTE) network. It will be appreciated that in other examples, other radio access technologies (e.g., Global System for Mobile Communications (GSM), Universal Mobile Telecommunications System (UMTS), and/or 5G New Radio (NR)), other network architectures, and/or other network nodes may be used to serve a roaming device.

The illustrated architecture includes a home network 104 and a visited network 102. The home network 104 may comprise a public land mobile network (PLMN) with which a user equipment (UE) 108 is registered and with which the UE has a billing arrangement. The visited network 102 may comprise a PLMN with which the UE 108 does not have a direct billing arrangement, but which has an arrangement with the home network 104 to serve devices which are registered with the home network 104. Whilst the UE 108 is attached to the visited network 102, the UE 108 may be referred to as a roaming device. Services which are provided to and used by a roaming device whilst attached to a visited network 102 may be referred to herein as roaming services.

The visited network 102 comprises at least a RAN 110, a visited mobility management entity (vMME) 124, a visited serving gateway (vS-GW) 116 and a visited packet gateway (vP-GW) 118. The home network 104 comprises at least a home subscriber server (HSS) 114 and a home packet gateway (hP-GW) 112.

The RAN 110 included in the visited network 102 provides radio coverage to the UE 108 and allows the UE 108 to wirelessly attach to the visited network 102. For example, the RAN 110 typically includes a plurality of base stations, at least one of which, exchanges radio communications with the UE 108 to allow the UE 108 to attach to the visited network 102 and use roaming services whilst attached to the visited network 102. The RAN 110 has an S1 interface with the vS-GW 116 and an S1 interface with the vMME 124. The vMME 124 is responsible for control-plane functions such as authentication, bearer activation and deactivation and assigning a serving gateway (vS-GW 116) for a UE 108. The vMME 124 has an S6A interface with the HSS 114 situated in the home network 104. The vMME 124 may authenticate the roaming UE 108 through communication with the HSS 114 situated in the home network 104.

The vS-GW 116 is responsible for routing and forwarding user data packets. The vS-GW 116 has an S5 interface with the vP-GW 118. The vS-GW 116 further has an S8 interface with the hP-GW 112 situated in the home network 104. The vP-GW 118 and/or the hP-GW 112 provides connectivity with an external data network such as the internet 106. Data packets associated with the roaming UE 108 may be routed (by the vS-GW 116) via either the hP-GW 112 or the vP-GW 118. Generally most data traffic associated with a roaming UE 108 may be routed via the hP-GW 112 such that data packets are routed through the home network 104 (which may be referred to as home routed traffic), even when the UE 108 is roaming. However, in some scenarios a local break-out data connection may be established through the vP-GW 118 such that data packets are routed through the vP-GW 118 and do not pass through the home network 104. For example, communications using an internet protocol multimedia subsystem (IPS) (such as data traffic associated with voice over internet protocol (VoIP) sessions) may use a local breakout in which data packets are routed through the vP-GW 118. However, even when data packets themselves are routed through the vP-GW 118 and do not pass through the home network 104, typically at least some signalling associated with a local breakout is visible to the home network 104 such that the use of data services by the roaming UE 108 remains visible to the home network 104.

As was explained above with reference to the architecture of FIG. 1, when a UE 108 is attached to a visited network 102, interfaces 120 are established between the home network 104 and the visited network 102. The interfaces 120 may include an S6A interface between the vMME 124 and the HSS 114 and/or may include an S8 interface between the vS-GW 116 and the hP-GW 112 as illustrated in the FIG. 1. In other examples, there may be one or more additional or alternative interfaces 120 between the home network 104 and the visited network 102. A monitoring system 122 may be arranged to monitor interfaces 120 between the home network 104 and the visited network 102.

Whilst not shown explicitly in FIG. 1, the interfaces 120 may include interfaces utilising signaling system no. 7 (SS7) protocols, Diameter protocols, and/or general packet radio service (GPRS) tunnelling protocols (GTP) such as a GTP user data tunneling (GTP-U) protocol and/or a GTP control (GTP-C) protocol. The interfaces 120 may generally include interfaces which carry signalling that can be used to determine properties such as an identity of a roaming device (such as the UE 108), and/or the establishment and use of connections, sessions, bearers and/or contexts by the roaming device. For example, monitoring of a Diameter protocol interface may enable the monitoring system 122 to identify roaming devices which have authenticated with the visited network 102 using the vMME 124 and the HSS 114. Monitoring of a SS7 protocol interface may enable the monitoring system 122 to monitor the use of circuit switched call services and/or short message services (SMS) by a roaming device. Monitoring of GTP-U and GTP-C protocol interfaces may enable the monitoring system 122 to monitor the establishment of a packet data connection (e.g., a packet data protocol (PDP) context) by a roaming device and/or data packets exchanged by the roaming device whilst attached to the visited network 102.

As has been described above with reference to the architecture of FIG. 1, a roaming UE 108, may attach to a visited network 102 and may utilise mobile data services whilst roaming and whilst attached to and using the visited network 102. Such data services provided to a roaming device are referred to herein as mobile data roaming services. However, in some scenarios, a roaming device may be prevented from using mobile data roaming services. A roaming device may be prevented from using mobile data roaming services by the home network 104 and/or the visited network 102. For example, a roaming device's subscription with a home network 104 may not allow for mobile data roaming services and/or the home network 104 may not have a sufficient agreement with the visited network 102 to allow for use of mobile data roaming services. Such network based blocks on mobile data roaming services are typically known to a network operator (e.g., an operator of the home network 104) and can be communicated to a user of the roaming device.

Additionally or alternatively, a roaming device may be prevented from using mobile data roaming services by a configuration of the roaming device. For example, a UE 108 may have a user setting which can be set to allow the use of mobile data roaming services or can be set to prevent the use of mobile data roaming services. Such a user setting may, for example, be viewable and may be changed (e.g., to selectively allow or prevent use of mobile data roaming services) by a user by using a user interface provided by the UE 108. For example, a user interface may be provided which allows a user to navigate to a settings menu which allows a user to view the current status of a user setting allowing for or preventing use of mobile data roaming services. A user setting for allowing or preventing use of mobile data roaming services may be referred to as a data roaming setting. A data roaming setting may be set to an "on" status to allow for the use of mobile data roaming services or may be set to an "off' status to prevent the use of mobile data roaming services. A user interface may further allow the user to change the status of the data roaming setting. For example, a user may turn data roaming on to allow the use of mobile data roaming services or turn data roaming off to prevent the use of mobile data roaming services through the user interface.

In many cases, devices are by default configured to prevent use of mobile data roaming services. For example, the default factory settings of many devices may be set to prevent use of mobile data roaming services (e.g., data roaming may be turned off as default). Use of mobile data roaming services may therefore require a user to change a configuration of the device, for example, to turn on data roaming. However, some users may not be aware of the need to change a configuration of the device and may be unaware of how to do so. A user of a roaming device may, in some scenarios, therefore attempt to use mobile data roaming services but may be prevented from doing so and may be unaware of the reason that they are unable to use mobile data roaming services or how to gain access to mobile data roaming services. Furthermore, a user in such a position will not be able to use mobile data roaming services, for example to access the internet or use data based messaging, to resolve their problem.

A device which has a configuration which prevents use of mobile data roaming services may not be known to a mobile network operator. Typically device configurations such as user settings are not reported to a network and as such a network operator (e.g., an operator of a home network 104) may not have direct access to the status of a device configuration such as a user setting. A network operator does not therefore typically communicate to a user that a configuration of their device prevents use of mobile data roaming services.

It has been realised that one or more properties which are determined by monitoring interfaces 120 (e.g., by a monitoring system 122) between a home network 104 and a visited network 102 may be used to determine that a configuration of a roaming device (such as a roaming UE 108) prevents use of mobile data roaming services by the roaming device. In particular, it has been realised that network usage data indicative of an amount of data which has been exchanged by a roaming device whilst attached to a visited network 102 may be used to determine that a configuration of the roaming device prevents use of mobile data roaming services. Such a determined device may be notified by sending a communication to the device, which may enable a configuration of the device to be changed in order to allow use of mobile data roaming services.

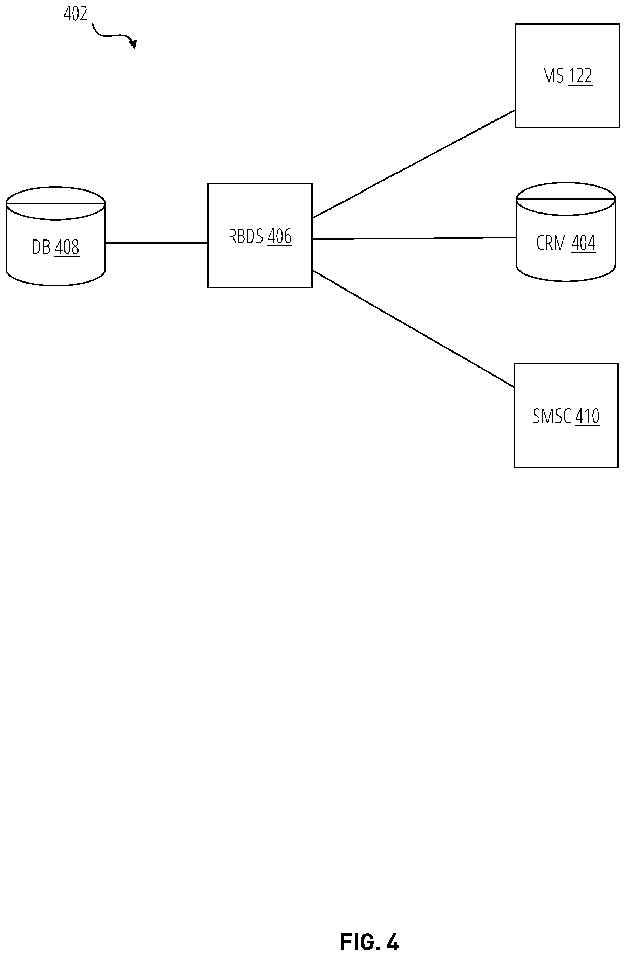

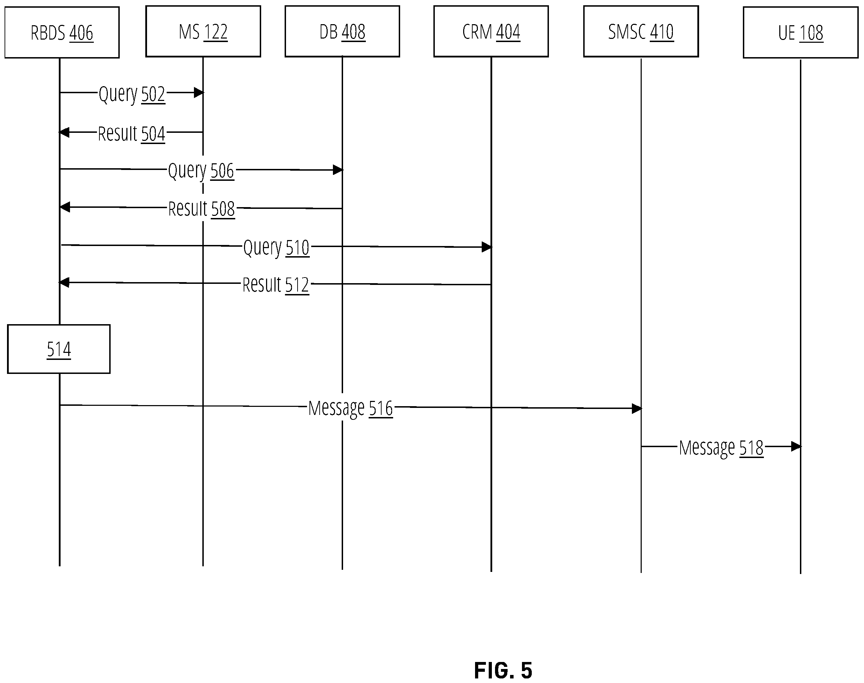

FIG. 2 is a flowchart of an example of a method 200 of notifying a roaming device that a configuration of the roaming device prevents mobile data roaming services. The roaming device comprises a UE (such as the UE 108 shown in FIG. 2) which is attached to a visited network 102. The method of FIG. 2 may be implemented by any suitable electronic device or combination of a plurality of electronic devices. For example, the method of FIG. 2 may be implemented by one or more devices which may form one or more network nodes or functions in a mobile telecommunications network. The method of FIG. 2 may, for example, be implemented by one or more devices, network nodes or functions situated in or communicatively coupled to the home network 104. As will be described in further detail below with reference to FIG. 4 and FIG. 5, all or part of the method 200 of FIG. 2 may be implemented by a dedicated network node, function or device which may be referred to herein as a roaming bar detection system 406.

The method 200 of FIG. 2 is presented from a perspective of already having determined one or more devices which are roaming (e.g., attached to a visited network 102). However, the method 200 may further comprise determining one or more devices which are roaming, for example, by determining one or more devices which are attached to a visited network 102. For example, the method may comprise determining one or more devices which are roaming by monitoring one or more interfaces 120 between the home network 104 and a visited network 102. For example, signalling which is exchanged between the home network 104 and a visited network 102 may be indicative of one or more devices which are attached to the visited network 102 and are therefore roaming. For example, mobility management signalling which is exchanged between a vMME 124 and an HSS 114 may be indicative of one or more device which are attached to a visited network 102 and a therefore roaming. A device which is referred to in the remaining steps 202 of the method 200 of FIG. 2 as being a roaming device may comprise a device which it has been determined is roaming. A step of determining one or more devices which are roaming may be performed before step 202, which is described below. Additionally or alternatively, a step of determining one or more devices which are roaming may be performed after the step 202, whcih is described below.

In step 202, of the method 200 of FIG. 2, network usage data is received. The network usage data is indicative of an amount of data which has been exchanged by the roaming device (such as a roaming UE 108) whilst attached to the visited network 102. The usage data may, for example, be received from a monitoring system 122 arranged to monitor interfaces 120 between the visited network 102 and a home network 104 with which the roaming device is registered. References herein to an amount of data which has been exchanged by a roaming device whilst attached to a visited network 102 is intended to refer to an amount of data which has been exchanged by the roaming device and using the visited network 102. That is, the amount of data which is exchanged by the roaming device whilst attached to the visited network 102 is an amount of data which is sent from and/or received by the roaming device and using the visited network 102 (as opposed to over some other form of data connection, such as a Wi-Fi connection, wired connection, local area network (LAN) connection etc.).

The amount of data which has been exchanged by the roaming device whilst attached to the visited network 102 may include an amount of data which is sent by the roaming device whilst attached to the visited network 102 and/or an amount of data which is received by the roaming device whilst attached to the visited network 102. That is, the usage data may be indicative of an amount of data which is sent by the roaming device whilst attached to the visited network 102 and/or may be indicative of an amount of data which is received by the roaming device whilst attached to the visited network 102. The usage data may separately indicate an amount of data which has been sent by the roaming device and an amount of data which has been received by the roaming device or may indicate a total amount of data which has been exchanged by the roaming device (i.e., sent and received) without discriminating between sent data and received data. In some examples, the usage data may comprise a plurality of data fields. For example, the usage data may comprise a first data field indicative of an amount of data which has been sent by the roaming device and a second data field indicative of an amount of data which has been received by the roaming device.

The usage data may be indicative of an amount of data which has been exchanged by the roaming device during a sample period of time. For example, the usage data may be indicative of an amount of data which has been exchanged by the roaming device during a sample period of time which precedes a current period of time. The sampling period of time may, for example, comprise a period of two hours or more.

The usage data may be indicative of a total amount of data which has been exchanged by the roaming device since it first attached to the visited network 102. The usage data may be indicative of a total amount of data which has been exchanged by the roaming device since a data connection (e.g., a PDP context) was established by the roaming device and using the visited network 102. An amount of data exchanged by the roaming device may be indicated in any suitable units, such as bytes.

The method 200 of FIG. 2 may optionally include determining an identity of the roaming device. For example, the received usage data may be further indicative of an identity of the roaming device. Additionally or alternatively, separate identity data indicative of an identity of the roaming device may be received. Data indicative of an identity of a roaming device (whether included in the usage data and/or in separate identity data) may include one or more of an international mobile subscriber identifier (IMSI), mobile station international subscriber directory number (MSISDN) and/or international mobile equipment identity (IMEI) associated with the roaming device. At least some forms of data indicative of an identity of a roaming device may be used to determine a device type (such as a make and/or model of the roaming device). For example, a IMEI associated with a roaming device may be used to determine a device type, which might include a make and/or model of the roaming device. In particular, a IMEI may include a type allocation code (TAC) (which may comprise the first 8 digits of the IMEI) which may uniquely identify a device including its model.

In step 204, of the method 200 of FIG. 2, it is determined, in dependence on the received network usage data, that a configuration of the roaming device prevents mobile data roaming services. The determination that a configuration of a roaming device prevents mobile data roaming services (in dependence on the received network usage data) may be made when one or more criteria are met. Generally, when a configuration of a roaming device prevents mobile data roaming services, the roaming device will exchange little or no data using the visited network 102. An amount of data which is exchanged by a roaming device whilst attached to the visited network 102 may therefore be used to determine whether a configuration of the roaming device prevents mobile data roaming services.

In at least some examples, it may be determined that a configuration of a roaming device prevents mobile data roaming services if an amount of data exchanged by the roaming device, whilst attached to the visited network 102 (as indicated by the received network usage data), is equal to or less than a threshold amount of data.

For example, it may be determined that a configuration of a roaming device prevents use of mobile data roaming services if a total amount of data exchanged by the roaming device (which includes both an amount of data sent by the roaming device and received by the roaming device) is equal to or less than a threshold amount of data. Additionally or alternatively, it may be determined that a configuration of a roaming device prevents use of mobile data roaming services if an amount of data sent by the roaming device is equal to or less than a threshold amount of data. Additionally or alternatively, it may be determined that a configuration of a roaming device prevents use of mobile data roaming services if an amount of data received by the roaming device is equal to or less than a threshold amount of data. Additionally or alternatively, it may be determined that a configuration of a roaming device prevents use of mobile data roaming services if an amount of data sent by the roaming device is equal to or less than a first threshold amount of data and that an amount of data received by the roaming device is equal to or less than a second threshold amount of data. The first threshold amount of data (to which an amount of data sent is compared) may be the same as or may be different to the second threshold amount of data (to which an amount of received data is compared).

In at least some examples, a threshold amount of data (to which an amount of exchanged data may be compared) may comprise substantially no data. For example, it may be determined that a configuration of a roaming device prevents use of mobile data roaming services if substantially no data is exchanged by the roaming device. For example, it may be determined that a configuration of a roaming device prevents use of mobile data roaming services if substantially no data is sent by the roaming device and substantially no data is received by the roaming device. Alternatively, it may be determined that a configuration of a roaming device prevents use of mobile data roaming services if substantially no data is sent by the roaming device (even if some data is received by the roaming device). Alternatively, it may be determined that a configuration of a roaming device prevents use of mobile data roaming services if substantially no data is received by the roaming device (even if some data is sent by the roaming device).

In some examples, a determination that a configuration of a roaming device prevents mobile data roaming services may be made based on the network usage data alone. In other examples, a determination that a configuration of a roaming device prevents mobile data roaming services may be made in further dependence on one or more other factors. For example, a determination may be made as to whether the roaming device has an established data connection (e.g., a PDP context) whilst attached to the visited network 102. Such a determination may, for example, be made by the monitoring system 122. Optionally, the method 200 may further comprise receiving an indication of whether the roaming device has an established data connection (e.g., a PDP context) whilst attached to the visited network 102. In at least some examples, the determination that a configuration of a roaming device prevents mobile data roaming services may be made in further dependence on the indication of whether the roaming device has an established data connection whilst attached to the visited network 102.

In some examples, it may be determined that the configuration of a roaming device prevents mobile data roaming services if suggested by the usage data (e.g., if an amount of data exchanged is less than or equal to a threshold as described above) and if the roaming device has an established data connection (e.g., a PDP context) whilst attached to the visited network 102.

In some examples, whether or not a roaming device has an established data connection (e.g., PDP context) may be helpful in discriminating between a roaming device having a configuration which prevents mobile data roaming services and a roaming device which has a data connection established through a network other than the visited network 102. For example, a roaming device which connects to a LAN such as a local WiFi network may establish a data connection (e.g., to the internet) through the LAN. Such a device may then appear to exchange little or no data using the visited network 102 to which it is attached, since it is instead exchanging data over a LAN connection which may not be visible to the mobile telecommunications network. Usage data received for such a roaming device might therefore suggest that the configuration of the roaming device prevents mobile data roaming services since little or no data is being exchanged by the roaming device and using the visited network 102. However, the roaming device may not necessarily have a configuration which prevents mobile data roaming services but may instead have a data connection through another network such as a LAN (e.g., through a WiFi connection).

A roaming device which has a data connection through another network such as a LAN, may typically drop (or not establish) its network connection through the visited network 102. For example, a roaming device may drop (or not establish) a PDP context through the visited network 102 when it has another established data connection (e.g., to through a LAN using a WiFi connection). A roaming device which has a data connection through another network (i.e., not using the visited network 102 or the home network 104) may therefore exchange little or no data using the visited network 102 and whilst attached to the visited network 102 but may also have no established data connection (e.g., a PDP context) whilst attached to the visited network 102 and using the visited network 102.

In contrast to this, it has been found that a roaming device which is configured to prevent mobile data roaming services may typically establish and maintain a data connection (e.g., a PDP context) though the visited network 102 (except where another form of data connection, e.g., through a LAN is established). A roaming device which has a configuration which prevents mobile data roaming services may therefore have an established data connection (e.g., a PDP context) through the visited network 102 but may exchange little or no data using the visited network 102 and whilst attached to the visited network 102.

In at least some examples, a roaming device whose usage data indicates that it has exchanged less than or equal to a threshold amount of data (where the threshold may be substantially no data) whilst attached to the visited network 102 and which has an established data connection (e.g., a PDP context) using the visited network 102, may be determined to be a roaming device which is configured to prevent mobile data roaming services. A roaming device whose usage data indicates that it has exchanged less than or equal to a threshold amount of data (where the threshold may be substantially no data) whilst attached to the visited network 102 but which has no established data connection (e.g., PDP context) using the visited network 102 may not be determined to have a configuration which prevents mobile data roaming services. It may instead be determined that such a device may have a data connection through another network such as a LAN and that this may be the reason that it has exchanged little or no data using the visited network 102.

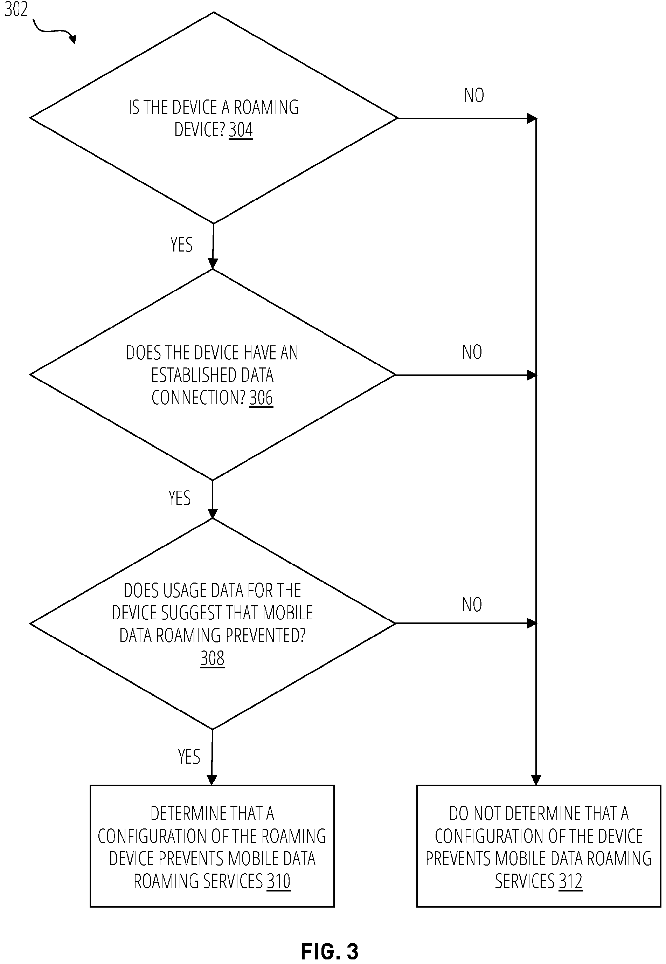

FIG. 3 is a flowchart of an example method 302 of determining whether or not a configuration of a roaming device prevents mobile data roaming services. The example method 302 shown in FIG. 3 may, for example, form all or part of step 204 of the method shown in FIG. 2. The method 302 of FIG. 3 is presented in the context of a single device (e.g., UE) but may be performed simultaneously or consecutively for a plurality of devices.

At step 304 it is determined whether or not a device is a roaming device. For example, it may be determined whether or not the device is attached to a visited network 102. In at least some examples, it may be determined whether or not the device is a roaming device in dependence on signalling (e.g., mobility management signalling) monitored at an interface 120 between a home network 104 and a visited network 102.

If it is determined that a device is a roaming device (i.e., the decision in step 304 is answered in the affirmative) then the method 302 proceeds to step 306. At step 306 it is determined whether or not the roaming device has an established data connection whilst attached to a visited network 102. For example, it may be determined whether or not the roaming device has an established PDP context whilst attached to a visited network 102. In at least some examples, it may be determined whether or not the roaming device has an established data connection in dependence on signalling monitored at an interface 120 between a home network 104 and a visited network 102.

If it is determined that a roaming device has an established data connection (i.e., the decision in step 306 is answered in the affirmative) then the method 302 proceeds to step 308. At step 308 it is determined whether or not usage data associated with the roaming device suggests that mobile data roaming services are prevented for the roaming device. The determination made at step 308 may be made using any of the criteria described above. For example, it may be determined that mobile data roaming services are prevented for the roaming device is an amount of data exchanged (which may include data sent from the device and/or data received from the device) by the roaming device whilst attached to the visited network 102 is less than or equal to a threshold amount of data (where the threshold may be substantially no data).

If it is determined that usage data associated with the roaming device suggests that mobile data roaming services are prevented for the roaming device (i.e., the decision at step 308 is answered in the affirmative) then the method proceeds to step 310. At step 310 it is determined that a configuration o the roaming device prevents mobile data roaming services. If any of the decisions at steps 304, 306 or 308 are answered in the negative then the method proceeds to step 312. At step 312 it is not determined that a configuration of the device prevents mobile data roaming services. It will be appreciated that any of steps 304, 306 or 308 may be performed in a different order to that which is indicated in FIG. 3. In at least some examples, it may be determined that a configuration of a device prevents mobile data roaming services if it is determined that the device is a roaming device, that the device has an established data connection (e.g., PDP context) and that usage data suggests that mobile data services are prevented, regardless of the order in which those determinations are made.

In other examples, additional or alternative criteria may be used to determine if a device has a configuration that prevents mobile data roaming services. For example, a roaming device which has exchanged less than or equal to a threshold amount of data (where the threshold may be substantially no data) whilst attached to the visited network may be determined to have a configuration which prevents mobile data roaming services regardless of whether or not it has an established data connection (e.g., a PDP context) using the visited network 102.

Returning again to the mehtod of FIG. 2, at step 206, of the method 200 of FIG. 2, a communication is sent, in dependence on the determination (made in step 204), to the roaming device. The communication indicates that the configuration of the roaming device prevents mobile data roaming.

The communication may be in a form which does not require mobile data roaming services such that it reaches the roaming device even when the roaming device cannot use mobile data roaming services. For example, the communication may comprise a short message service (SMS) message. The communication may include text which can be displayed by the roaming device to inform a user of the roaming device that it appears that the device has a configuration which prevents mobile data roaming services.

The communication may further comprise instructions for changing a configuration of the roaming device to allow mobile data roaming. For example, the communication may comprise text and/or images providing instructions which can be followed by the user to change a configuration of the roaming device (for example, by accessing a data roaming setting via a user interface) to allow mobile data roaming (e.g., to turn on a data roaming setting).

Instructions for changing a configuration of the roaming device may be determined in dependence on a determined device type of the roaming device. As was described above, the method 200 may include determining an identity of the roaming device. For example, the received usage data may be further indicative of an identity of the roaming device and/or separate identity data indicative of an identity of the roaming device may be received. At least some forms of indication of an identity of a roaming device may be used to determine a type, such as a make and/or model of the roaming device. For example, an IMEI may be used to determine a device type, which might include a make and/or model of the roaming device.

Different device types (e.g., make and/models) may require different actions in order to allow mobile data roaming services. For example, different device types may have different ways of accessing setting menus and/or may have different ways of navigated the settings menus in order to change an appropriate user setting. By determining instructions for changing a configuration of the roaming device in dependence on a determined device type, the instructions can be formulated to be effective for the device type of the roaming device.

The communication may further comprise information about a billing policy associated with providing mobile data roaming services. Different billing policies may be applied to different roaming devices when providing mobile data roaming services. For example, some devices may be charged per amount of mobile data exchanged whilst attached to the visited network, some devices may be able to use mobile data roaming services without additional charge and some devices may benefit from a given amount of use of mobile data roaming services for a fixed charge. Such options may each comprise billing policies associated with providing mobile data roaming services. Providing information about a billing policy associated with providing mobile data roaming services in the communication, may assist a user to make an informed decision on whether or not to change a configuration of the roaming device to allow mobile data roaming services.

In some examples, sending of the communication may be in further dependence on one or more other properties (in addition to the determination that a configuration of the roaming device prevents mobile data roaming services). For example, sending of the communication may be in further dependence on a billing policy associated with charging of usage of mobile data roaming services by the roaming device. As was explained above, different roaming devices may have different billing policies (for charging for mobile data roaming services) associated with them. A billing policy associated with a roaming device may be used to determine whether or not to send a communication (indicating that a configuration of the roaming device prevents mobile data roaming services) to the roaming device. For example, it may be determined to send a communication to a roaming device which has a billing policy associated with it which indicates that a user of the roaming device has already paid (for example, by pre-purchasing a data roaming bundle) for mobile data roaming services (since the billing policy suggests that the user wishes to access mobile data roaming services). Additionally or alternatively, it may be determined to send a communication to a roaming device which has a billing policy associated with it which indicates that mobile data roaming services will be provided at no extra cost. Additionally or alternatively, it may be determined to send a communication to a roaming device which has a billing policy associated with it which indicates that mobile data roaming services will be provided at a fixed cost.

In some examples, it may be determined not to send a communication to a roaming device (indicating that a configuration of the roaming device prevents mobile data roaming services) in dependence on a billing policy associated with the roaming device. For example, it may be determined not to send a communication to a roaming device if a billing policy indicates that a user of the device has not already paid for mobile data roaming services or that additional costs will be incurred for using mobile data roaming services. Additionally or alternatively, it may be determined not to send a communication to a roaming device if a billing policy indicates that use of mobile data roaming services will be charged in dependence on an amount of data exchanged (as opposed to being charged at a fixed cost).

In some examples, sending of the communication may be in further dependence on a communication policy associated with sending of communications to the roaming device. For example, a network subscription (e.g., subscription with the home network 104) associated with the roaming device may include a communication policy which may indicate whether or not a user of the roaming device has chosen to receive or to not receive communications from a network provider. For example, a user may choose not receive all or some communications from a network provider and such preferences may be stored as a communication policy associated with the user's subscription and the roaming device. It may be determined not to send a communication to the roaming device if a communication policy associated with the roaming device indicates that a user of the roaming device has chosen not to receive at least some communications from a network provider. It may be determined to send a communication to the roaming device if a communication policy associated with the roaming device indicates that a user of the roaming device has chosen to receive (or at least has not opted out of receiving) at least some communications from a network provider.

FIG. 4 is a schematic illustration of a system 402, all or part of which may be used to implement any method described herein (e.g., any method 200 described above with reference to FIG. 2. All or part of the system 402 may form part of a home network 104 (e.g., as part of a core network of the home network 104). Additionally or alternatively, all or part of the system 402 may be communicatively coupled to a home network 104.

The system 402 includes a roaming bar detection system (RBDS) 306, a monitoring system (MS) 122, a customer relationship management system (CRM) 404, a database (DB) 308 and a short message service center (SMSC) 410. Any of the components 406, 122, 404, 408, 410 of the system 402 may be implemented as one or more electronic devices such as network connected servers.

The roaming bar detection system 406 may be configured to implement any of the methods described herein. For example, the roaming bar detection system 406 may be configured to implement any of the steps of a method 200 described above with reference to FIG. 2. The monitoring system 122 may be a monitoring system 122 as described above with reference to FIG. 1. For example, the monitoring system 122 may be configured to monitor interfaces 120 between a home network 104 and a visited network 102. The CRM 404 may store at least some data associated with network user accounts. For example, the CRM 404 may store data indicating communication policies and/or billing policies associated with network user accounts. The database 408 may store at least some data associated with roaming devices. For example, the database 408 may store data indicating whether roaming devices are unsuitable for receiving a communication or have already received a communication. The SMSC 410 may be configured to perform various functions associated with SMS messages. For example, the SMSC 410 may be configured to store, forward, convert and/or deliver SMS messages in a mobile telecommunications network.

FIG. 5 is a signal flow diagram of a method of notifying a roaming device that a configuration of the roaming device prevents mobile data roaming services. The signal flow illustrated in FIG. 5 may form all or part of any method 200 described above with reference to FIG. 2.

The signal flow illustrated in FIG. 5 begins with the roaming bar detection system 406 sending a query 502 to the monitoring system 122. The query 502 may be a query for usage data associated with roaming devices and/or other data associated with roaming devices which is monitored by the monitoring system 122 (which monitors interfaces 120 between a home network 104 and a visited network 102). The other data associated with roaming devices may, for example, include identity data indicative of an identity of each roaming device (such as an MSISDN, IMEI and/or IMSI) and/or data indicating whether or not each roaming device has an established data connection (e.g., a PDP context) using the visited network 102. The other data may further include properties such as a roaming country and/or operator of the visited network 102.

The monitoring system 122 returns a result 504 to the roaming bar detection system 406 in response to the query 502. The result 504 may include the data requested in the query 502. For example, the result 504 may include usage data associated with roaming devices and/or other data associated with roaming devices as described above.

In some examples, the query 502 may comprise a query for a list of roaming devices (and data associated with those roaming devices) which meet one or more criteria. For example, the query 502 may comprise a query for a list of roaming devices which have exchanged an amount of data whilst attached to a visited network 102 (and using a visited network 102) which is less than or equal to a threshold amount of data. As was explained in detail above the amount of data which is exchanged by a roaming device whilst attached to a visited network 102 may include data which is sent by the roaming device and/or data which is received by the roaming device. As was further explained above, the amount of data exchanged by a roaming device may be an amount of data which is exchanged over a sample period of time, which may for example be a period of time of two hours of more (e.g., the last two hours).

The threshold amount of data may, in at least some examples, be substantially no data. For example, the query 502 may be a query 502 for a list of roaming devices (and associated data) which have exchanged (sent, received and/or both sent and received) substantially no data using the visited network 102. In at least some examples, the query 502 may be a query 502 for a list of roaming devices (and associated data) which have exchanged (sent, received and/or both sent and received) substantially no data using the visited network 102 over a sample period of time, which may for example comprise the last two hours or more.

In examples in which the query 502 is a query for a list of roaming devices (and data associated with those roaming devices) which meet one or more criteria, then the initial identification of candidate roaming devices which may have a configuration which prevents mobile data roaming services may be made by the monitoring system 122. The result 504 may therefore comprise a list of candidate roaming devices (and data associated with those roaming devices) which may be roaming devices having a configuration which prevents mobile data roaming services.

In other examples, the query 502 may be a query 502 for data (at least including usage data) associated with all roaming devices which are being monitored by the monitoring system 122. In such examples, the roaming bar detection system 406 may use the data returned in the result 504 to determine one or more roaming devices which are candidate roaming devices which may have a configuration which prevents mobile data roaming services. For example, the roaming bar detection system 406 may determine one or more roaming devices which meet one or more criteria, such as having exchanged little or no data whilst attached to the visited network 102 (and using the visited network 102).

Once a list of candidate roaming devices which may have a configuration which prevents mobile data roaming services has been determined using the result 504 returned from the monitoring system 122, the roaming bar detection system 406 may check one or more other properties before determining whether or not to send a communication to one or more roaming devices.

For example, the roaming bar detection system 406 may send a query 506 to the database 408. The query 506 may be a query for determining any factors which may make a roaming device ineligible for receiving a communication indicating that the configuration of the roaming device prevents mobile data roaming. For example, the query 506 may be a query 506 to establish if one ore more roaming devices have recently received a communication indicating that the configuration of the roaming device prevents mobile data roaming. For example, if a communication has already been sent to a roaming device within a recent period of time (e.g., within about a day) then it may be determined not to send a further communication to the roaming device. Additionally or alternatively, the query 506 may be a query 506 to determine if one or more roaming devices are suitable for receiving a communication. For example, if a roaming device comprises a device which is not suitable for receiving an SMS message and displaying the SMS message to a user of the device (examples of which might include an internet of things (IoT) device or a broadband dongle) then it may be determined not to send a communication to the roaming device.

The database 408 returns a result 508 to the roaming bar detection system 406. The result 508 may indicate any factors which may make a roaming device ineligible for receiving a communication indicating that the configuration of the roaming device prevents mobile data roaming.

The roaming bar detection system 406 may send a query 510 to the CRM 404. The query 510 sent to the CRM 404 may be a query to establish any factors related to a user account associated with one or more roaming devices which may be used to determine whether to send a communication to a roaming device. For example, the query 510 sent to the CRM 404 may comprise a query 510 to establish a billing policy associated with one or more roaming devices. As was explained above, a billing policy associated with a roaming device may be used to determine whether or not to send a communication to the roaming device. For example, a communication may be sent to a roaming device which has already paid for mobile data roaming services and/or can use mobile data roaming services at no extra cost. Additionally or alternatively, the query 510 may be a query to establish if a communication policy associated with one or more roaming devices indicates that a communication should not be sent to the one or more roaming devices (e.g., if a customer has opted out of receiving at least some communications). Additionally or alternatively, the query 510 may be a query to establish if mobile data roaming services are blocked for a roaming device by a mobile telecommunications network (e.g., the home network 104 and/or the visited network 102). For example, if mobile data roaming services are blocked for a roaming device then it may be determined not to send a communication to the roaming device, since the roaming device would not be able to use mobile data roaming services even if a configuration of the roaming device is changed.

A CRM 404 returns a result 512 to the roaming bar detection system 406. The result 512 may indicate one or more additional factors which as described above may be used to determine whether or not to send a communication to a roaming device.

As indicated in the signal flow diagram of FIG. 5, the roaming bar detection system 406 makes a determination 514 of whether to send a communication to one or more roaming devices. As was explained in detail above, the determination 514 may be made in dependence on one or more of the result 504 returned from the monitoring system 122, the result 508 returned from the database 408 and the result 512 returned from the CRM 404. The determination 514 may be made based on any of the factors described above in detail with reference to both FIG. 2 and FIG. 5.

The determination 514 may further comprise a determination 514 of a content of one or more communications to be sent to one or more roaming devices. For example, as was described above, the communication may comprise instructions for changing a configuration of the roaming device to allow mobile data roaming. As was further described above, the instructions may be determined in dependence on a determined device type of a roaming device such that the instructions are suitable for the roaming device to which they are sent. The content of a communication may be further determined for a particular device and/or user. For example, the communication be determined to include text which includes a user's name, a device type of a roaming device, instructions for changing a configuration of the roaming device and/or information regarding a billing policy associated with a roaming device.

The determination 514 may result in one or more communications to be sent to one or more roaming devices. In dependence on the determination 514, one or more messages 516 may be sent from the roaming bar detection system 406 to the SMSC 410. The one or more messages 516 may comprise instructions to send one or more SMS messages to one or more roaming devices. The instructions may, for example, include at least an identifier of the one or more roaming devices to which an SMS message is to be sent and a content of the one or more SMS messages to be sent to the one or more roaming devices.

In response to receiving one or more messages 516 from the roaming bar detection system 406, the SMSC 410 generates and sends one or more SMS messages 518 to one or more roaming devices. The one or more SMS messages 518 indicate that the configuration of a roaming device prevents mobile data roaming.

The signal flow diagram of a method which is shown in FIG. 5 is presented generally in the form of a query and response mechanism in which the roaming bar detection system 406 issues queries and receives responses to those queries. In other examples, a subscribe and publish mechanism may instead be used. For example, the roaming bar detection system 406 may subscribe to notification of updates on a status of one or more roaming devices. The monitoring system 122 may monitor data associated with one or more roaming devices and may send notifications to the roaming bar detection system 406 when one or more criteria are met for sending an update to the roaming bar detection system 406. For example, the monitoring system 122 may send a notification to the roaming bar detection system 406 to notify the roaming bar detection system 406 of the occurrence of events such as detection of a device which is roaming (e.g., attached to a visited network), the establishment of a data connection (e.g. PDP context) by a roaming device, and/or the determination that a roaming device has exchanged little or no data whilst attached to a visited network.

Methods and apparatus have been described herein for determining and notifying a roaming device that a configuration of the roaming device prevents mobile data roaming services. Corresponding methods and apparatus may be used to determine and notify a UE (which isn't necessarily a roaming device) that a configuration of the UE prevents any mobile data services. For example, at least some UEs may have a user setting (separate from a data roaming setting) relating to mobile data services, which (similarly to a data roaming setting, can be turned on or off) to prevent or allow use of mobile data services. A UE which has a mobile data service setting set to off to prevent mobile data services will be unable to use mobile data services even when attached to a home network (and not therefore being a roaming device). The problem described above with reference to roaming devices may therefore apply to some UEs even when attached to a home network.

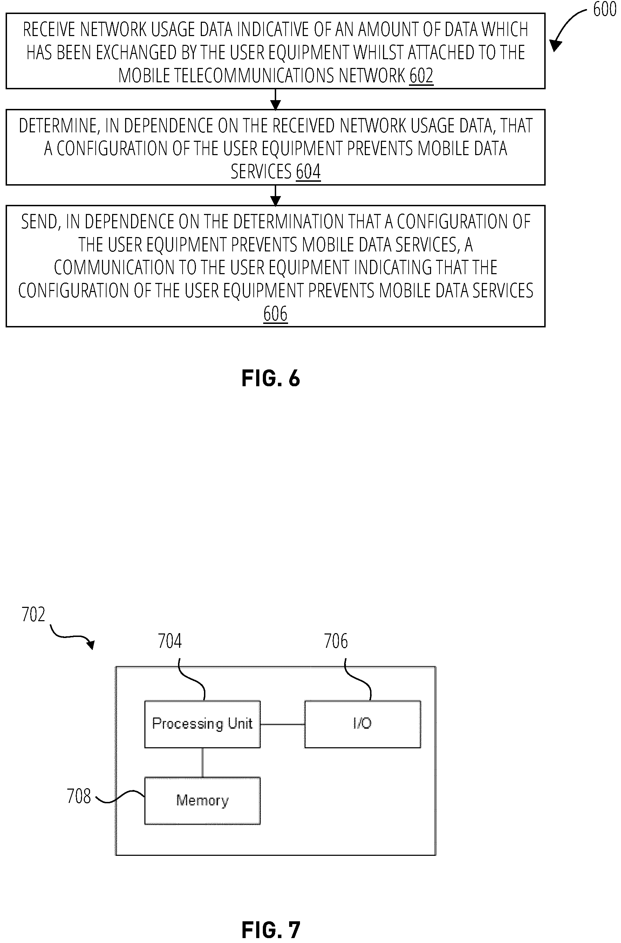

FIG. 6 is a flowchart of a method 600 for notifying a UE attached to a mobile telecommunications network that a configuration of the UE prevents mobile data services. The UE may be attached to its home network and may therefore not be a roaming device. At step 602 of the method 600 of FIG. 6, network usage data indicative of an amount of data which has been exchanged by the UE whilst attached to the mobile telecommunications network (and using the mobile telecommunications network). Any of the features described above relating to usage data indicative of an amount data which has been exchanged by a roaming device whilst attached to a visited network 102 may also apply to the network usage data indicative of an amount of data which has been exchanged by the UE whilst attached to the mobile telecommunications network. For example, the network usage data may include an amount of data which is sent by the UE whilst attached to the mobile telecommunications network and/or an amount of data which is received by the UE whilst attached to the mobile telecommunications network.

The network usage data may be indicative of an amount of data which has been exchanged by the UE during a sample period of time. For example, the network usage data may be indicative of an amount of data which has been exchanged by the UE during a sample period of time which precedes a current period of time. The sampling period of time may, for example, comprise a period of two hours or more.

The usage data may be indicative of a total amount of data which has been exchanged by the roaming device since it first attached to the mobile telecommunications network. The usage data may be indicative of a total amount of data which has been exchanged by the UE since a data connection (e.g., a PDP context) was established by the UE and using the mobile telecommunications network. An amount of data exchanged by the UE may be indicated in any suitable units, such as bytes.

The network usage data may be received from any suitable component, network function, element or node which monitors data exchanged in the mobile telecommunications network or has access to network usage data.

At step 604 of the method 600 of FIG. 6, it is determined, in dependence on the received network usage data, that a configuration of the UE prevents mobile data services. The determination made at step 604 of the method 600 of FIG. 6 may include any of the features described above with reference to the determination made at step 204 of the method 200 of FIG. 2. For example, the determination that a configuration of a UE prevents mobile data services (in dependence on the received network usage data) may be made when one or more criteria are met (such as the UE exchanging little or no data whilst attached to the mobile telecommunications network).

In at least some examples, it may be determined that a configuration of a UE prevents mobile data services if an amount of data exchanged by the UE whilst attached to the mobile telecommunications network (as indicated by the received network usage data) is equal to or less than a threshold amount of data.

It may be determined that a configuration of a UE prevents use of mobile data services if a total amount of data exchanged by the UE (which includes both an amount of data sent by the UE and received by the UE) is equal to or less than a threshold amount of data. Additionally or alternatively, it may be determined that a configuration of a UE prevents use of mobile data services if an amount of data sent by the UE is equal to or less than a threshold amount of data. Additionally or alternatively, it may be determined that a configuration of a UE prevents use of mobile data services if an amount of data received by the UE is equal to or less than a threshold amount of data. Additionally or alternatively, it may be determined that a configuration of a UE prevents use of mobile data services if an amount of data sent by the UE is equal to or less than a first threshold amount of data and that an amount of data received by the UE is equal to or less than a second threshold amount of data (where the first threshold amount of data may be the same as or may be different to the second threshold amount of data).

In at least some examples, a threshold amount of data (to which an amount of exchanged data may be compared) may comprise substantially no data.

In some examples, a determination that a configuration of a UE prevents mobile data services may be made based on the network usage data alone. In other examples, a determination that a configuration of a UE prevents mobile data services may be made in further dependence on one or more other features. For example, the determination that a configuration of a UE prevents mobile data services may be made in further dependence on whether the UE has an established data connection (e.g., a PDP context) whilst attached to the mobile telecommunications network.

In some examples, it may be determined that the configuration of a UE prevents mobile data services if suggested by the usage data (e.g., if an amount of data exchanged is less than or equal to a threshold as described above) and if the UE has an established data connection (e.g., a PDP context) whilst attached to the mobile telecommunications network.

In at least some examples, a UE whose usage data indicates that it has exchanged less than or equal to a threshold amount of data (where the threshold may be substantially no data) whilst attached to the mobile telecommunications network and which has an established data connection (e.g., a PDP context) using the mobile telecommunications network may be determined to be a UE which is configured to prevent mobile data services A UE whose network usage data indicates that it has exchanged less than or equal to a threshold amount of data (where the threshold may be substantially no data) whilst attached to the mobile telecommunications network but which has no established data connection (e.g., PDP context) using the mobile telecommunications network may not be determined to have a configuration which prevents mobile data services. It may instead be determined that such a device may have a data connection through another network such as a LAN and that this may be the reason that it has exchanged little or no data using the mobile telecommunications network.

In other examples, a UE which has exchanged less than or equal to a threshold amount of data (where the threshold may be substantially no data) whilst attached to the mobile telecommunications network may be determined to have a configuration which prevents mobile data services regardless of whether or not it has an established data connection (e.g., a PDP context) using the mobile telecommunications network.

At step 606 of the method 600 of FIG. 6, a communication is sent to the UE, in dependence on the determination that a configuration of the UE prevents mobile data services. The communication indicates that the configuration of the UE prevents mobile data services. The sending of a communication at step 606 of the method 600 of FIG. 6 may include any of the features described above with reference to the sending of a communication at step 206 of the method 200 of FIG. 2. For example, the communication may comprise an SMS message. The communication may include text which can be displayed by the UE to inform a user of the UE that it appears that the device has a configuration which prevents mobile data services.

The communication may further comprise instructions for changing a configuration of the UE to allow mobile data services. Instructions for changing a configuration of the UE may be determined in dependence on a determined device type (e.g., make and/or model) of the UE. The communication may further comprise information about a billing policy associated with providing mobile data services.

In some examples, sending of the communication may be in further dependence on one or more other properties (in addition to the determination that a configuration of the UE prevents mobile data services). For example, sending of the communication may be in further dependence on a billing policy associated with charging of usage of mobile data services by the UE. In some examples, sending of the communication may be in further dependence on a communication policy associated with sending of communications to the UE.

Various methods have been described herein in which some of the method steps may be implemented on any suitable electronic device (such as a computing device) and/or combination of electronic devices (e.g. computing devices). FIG. 7 is a schematic illustration of an example electronic device 702 which may be used to implement all or part of any method described herein.

The electronic device 702 may include at least one processing unit 704, memory 708 and an input/output interface 706. The processing unit 704 may include any suitable processor and/or combination of processors. For example, the processing unit 704 may include one or more of a Central Processing Unit (CPU) and a Graphical Processing Unit (GPU). The memory 708 may include volatile memory and/or non-volatile/persistent memory. The memory 708 may, for example, be used to store data such as an operating system, instructions to be executed by the processing unit (e.g. in the form of software to be executed by the processing unit), configuration information related to the electronic device 702, session information and/or configuration or registration information associated with any other device, node or module in the network. In some examples, the memory 708 may be used to store instructions for executing any of the methods disclosed herein.

At least the processing unit 704 is connected to the input/output interface 706. The input/output interface 706 may facilitate communication with one or more other devices. For example, the input/output interface 706 may be operable to transmit and/or receive communications to/from other devices in a network.

Optionally, the electronic device 702 may further include a display (not shown). The display may comprise any suitable electronic display such as a touch sensitive display. The display may be connected to at least to the processing unit 704. The processing unit 704 may generate display signals which are sent to the display in order to cause the display information.

In the interest of conciseness not all possible alternatives which fall within the scope of the present disclosure have been explicitly discussed herein. As the skilled person will appreciate, in the present disclosure any aspect discussed from the perspective of an element being operable to do an action also discloses the same feature from the perspective of a method including a method step corresponding to the action. Similarly, any discussion presented from the perspective of a method step also discloses the same features from the perspective of any one or more suitable elements being operable or configured to carry out some or all of the method step. It is also considered within the present disclosure that for any method step(s), there can be a computer program configured to carry out, when executed, the method step(s).

Examples of the present disclosure can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement examples of the present disclosure. Accordingly, examples provide a program comprising code for implementing a system or method as claimed in any preceding claim and a machine readable storage storing such a program. Still further, examples of the present disclosure may be conveyed electronically via any medium such as a communication signal carried over a wired or wireless connection and examples suitably encompass the same.

Features, integers, characteristics, or groups described in conjunction with a particular aspect, embodiment or example of the invention or disclosure are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing examples.

## Claims

1. A method of notifying a roaming device that a configuration of the roaming device prevents mobile data roaming services, wherein the roaming device comprises a user equipment attached to a visited mobile telecommunications network, and wherein the method comprises:
receiving network usage data indicative of an amount of data which has been exchanged by the roaming device whilst attached to the visited mobile telecommunications network;
determining, in dependence on the received network usage data, that a configuration of the roaming device prevents mobile data roaming services; and
sending, in dependence on the determination that a configuration of the roaming device prevents mobile data roaming services, a communication to the roaming device indicating that the configuration of the roaming device prevents mobile data roaming.

2. The method of claim 1, wherein the network usage data is indicative of an amount of data which has been sent by the roaming device whilst attached to the visited mobile telecommunications network.

3. The method of claim 1 or 2, wherein the network usage data is indicative of an amount of data which has been received by the roaming device whilst attached to the visited mobile telecommunications network.

4. The method of any one of claims 1 to 3, wherein determining that a configuration of the roaming device prevents mobile data roaming services comprises determining, from the network usage data, that an amount of data which has been exchanged by the roaming device whilst attached to the visited mobile telecommunications network is equal to or less than a threshold amount of data.

5. The method of claim 4, wherein the threshold amount of data comprises substantially no data.

6. The method of any one of claims 1 to 5, further comprising:
monitoring an interface between the visited mobile telecommunications network and a home mobile telecommunications network; and
generating the network usage data based on the monitoring of the interface between the visited mobile telecommunications network and the home mobile telecommunications network.

7. The method of any one of claims 1 to 6, further comprising determining that the roaming device has an established data connection whilst attached to the visited mobile telecommunications network,
wherein the determining that a configuration of the roaming device prevents mobile data roaming services, is further in dependence on the determination that the roaming device has an established data connection whilst attached to the visited mobile telecommunications network.

8. The method of any one of claims 1 to 7, wherein the communication to the roaming device indicating that the configuration of the roaming device prevents mobile data roaming further comprises instructions for changing a configuration of the roaming device to allow mobile data roaming.

9. The method of claim 8, further comprising determining a device type of the roaming device; and
determining the instructions for changing a configuration of the roaming device in dependence on the determined device type of the roaming device.

10. The method of any one of claims 1 to 8, further comprising determining a billing policy associated with charging of usage of mobile data roaming services by the roaming device,
wherein sending of the communication to the roaming device indicating that the configuration of the roaming device prevents mobile data roaming is further in dependence on the determined billing policy.

11. The method of any one of claims 1 to 10, further comprising determining a communication policy associated with sending of communications to the roaming device,
wherein sending of the communication to the roaming device indicating that the configuration of the roaming device prevents mobile data roaming is further in dependence on the determined communication policy.

12. The method of any one of claims 1 to 11, further comprising determining that the roaming device is attached to a visited network.

13. A method of notifying a user equipment attached to a mobile telecommunications network that a configuration of the user equipment prevents mobile data services, wherein the method comprises:
receiving network usage data indicative of an amount of data which has been exchanged by the user equipment whilst attached to the mobile telecommunications network;
determining, in dependence on the received network usage data, that a configuration of the user equipment prevents mobile data services;
sending, in dependence on the determination that a configuration of the user equipment prevents mobile data services, a communication to the user equipment indicating that the configuration of the user equipment prevents mobile data services.

14. A computer program comprising instructions which, when executed, cause the method of any one of claims 1 to 13 to be implemented.

15. A system for notifying a roaming device that a configuration of the roaming device prevents mobile data roaming services, wherein the roaming device comprises a user equipment attached to a visited mobile telecommunications network, and wherein the system is configured to:
receive network usage data indicative of an amount of data which has been exchanged by the roaming device whilst attached to the visited mobile telecommunications network;
determine, in dependence on the received network usage data, that a configuration of the roaming device prevents mobile data roaming services; and
send, in dependence on the determination that a configuration of the roaming device prevents mobile data roaming services, a communication to the roaming device indicating that the configuration of the roaming device prevents mobile data roaming.

16. A system for notifying a user equipment attached to a mobile telecommunications network that a configuration of the user equipment prevents mobile data services, wherein the system is configured to:
receive network usage data indicative of an amount of data which has been exchanged by the user equipment whilst attached to the mobile telecommunications network;
determine, in dependence on the received network usage data, that a configuration of the user equipment prevents mobile data services; and
send, in dependence on the determination that a configuration of the user equipment prevents mobile data services, a communication to the user equipment indicating that the configuration of the user equipment prevents mobile data services.
